# EUROPEAN PATENT APPLICATION

(11) **EP 2 070 778 A1**
(43) Date of publication of application: **17.06.2009**
(21) Application number: 08169591.8
(22) Date of filing: 21.11.2008
(51) Int. Cl.: B60R 21/34

(54) **Airbag apparatus**

(30) Priority: 13.12.2007 JP 2007322130; 19.09.2008 JP 2008240264
(71) Applicant: Takata Corporation, Tokyo 106-8510 (JP)
(72) Inventor: Nakamura, Atsushi, Minato-ku Tokyo Tokyo 106-8510 (JP)
(74) Representative: Vossius & Partner

(57) **Abstract**

A small-sized and light-weighted airbag apparatus is provided which can be rapidly developed.

The airbag apparatus 10 includes an airbag 20, a gas-generator 15 for blowing out a gas into an inside of the airbag 20, a detection device for detecting a collision, and a control device for activating the gas-generator 15 by means of a signal from the detection device, and expanding the airbag 20 disposed along a front pillar 2 on an outside of a vehicle 1. The airbag 20 is formed in an approximately U-shaped manner, including a first main expanding portion 20a₁, and second main expanding portions 20a₂ respectively extending from both ends of the first main expanding portion 20a₁, and is housed in an approximately U-shaped state, and is developed in an approximately U-shaped manner (Fig. 11).

## Description

The present invention belongs to a technical field of an airbag apparatus for absorbing an impact applied to an object of a collision or a vehicle, upon expanding and developing to an outside of the vehicle by means of a gas from an inflator or the like, in an emergency such as a case when the vehicle collides with the object of the collision, or the like.

Hitherto, an airbag apparatus that absorbs an impact generated by a re-collision between a pedestrian or the like, and a vehicle, by means of causing the airbag to expand to a rear side of a hood and an outside of pillar portions of the vehicle at a time of collision between the vehicle and the pedestrian or the like, is known.

For example, an airbag apparatus in which an airbag apparatus is mounted in an engine hood, and an airbag is extended along a front shield glass and front pillars at a time of expansion and development of the airbag, is disclosed (refer to JP-A-2007-112183 (Patent Document 1)).

Further, an airbag apparatus, in which an airbag module extending in a left-and-right direction of a vehicle is arranged between a rear edge of a hood and a front edge of a cowl top, is supported by means of a damper housing having high rigidity without applying an influence to the arrangement of an air-suction inlet, a wiper, and so forth is disclosed (refer to JP-A-2006-62488 (Patent Document 2)).

However, in the airbag apparatus described in the Patent Document 1, since the airbag expanding in a manner so as to cover the front pillar is mounted in the engine hood, a time required for the airbag to be developed up to an upper part of the front pillar is long.
Furthermore, in the airbag apparatus described in the Patent Document 2, since the airbag module itself is supported by means of the damper housing, a sufficient strength is required to a case of the airbag so that damage is not applied to the peripheral parts when developed, resulting in problems that the weight becomes high, and the size becomes large.

The present invention is made in consideration of the above-described situation, and the object of the present invention is to provide an airbag apparatus that is capable of rapidly developing, and is small in size and light in weight.

In order to solve the above-described problems, the invention as claimed in Claim 1 is characterized in that in an airbag apparatus including an airbag, a gas-generator for blowing out a gas into an inside of the airbag, a detection device for detecting a collision, and a control device for activating the gas-generator by means of a signal from the detection device, and expanding the airbag on an outside of a vehicle, the airbag is formed in an approximately U-shaped manner including a first main expanding portion, and a second main expanding portion respectively extending from both ends of the first main expanding portion, and is housed in an approximately U-shaped state, and is developed in an approximately U-shaped manner.

Further, the invention as claimed in Claim 2 is
characterized in that the airbag is configured to fix only the second main expanding portions to a vehicle body side.

Furthermore, the invention as claimed in Claim 3 is characterized in that the first main expanding portion is disposed at a front side below the windshield on the outside of the vehicle, and the second main expanding portions are disposed along front pillars, respectively, on the outside of the vehicle.

Moreover, the invention as claimed in Claim 4 is characterized in that the airbag includes a third main expanding portion that couples end portions of the respective second main expanding portions and faces the first main expanding portion, and that is disposed on the windshield side of a roof on the outside of the vehicle, and the airbag is formed to have an approximately closed rectangle shape, and is housed in a state of the approximately closed rectangle shape, and is developed in the approximately closed rectangle manner.

Further, the invention as claimed in Claim 5 is characterized in that the first main expanding portion is disposed on a windshield side of a roof on the outside of the vehicle, and the second main expanding portions are disposed along front pillars, respectively, on the outside of the vehicle.

According to the thus constructed airbag apparatus with respect to the present invention, since the airbag is formed in an approximately U-shaped manner including a first main expanding portion and second main expanding portions respectively extending from both ends of the first main expanding portion, and is housed in an approximately U-shaped state, and is developed in an approximately U-shaped manner, a distance from the housed position to the developing position is small and thereby the airbag can be rapidly developed.

Further, since the airbag is configured to fix only the second main expanding portion to the vehicle body side, a case having rigidity, for the first main expanding portion is not necessary, and a size and a weight of the airbag apparatus can be lightened as a whole.

Furthermore, since the first main expanding portion is disposed at a front side below the windshield on the outside of the vehicle, and the second main expanding portions are disposed along the respective front pillars on the outside of the vehicle, the impact generated by a re-collision between a pedestrian or the like and a vehicle is absorbed.

Moreover, since the airbag is provided with a third main expanding portion that couples end portions of the respective second main expanding portions and faces the first main expanding portion, and is disposed on the windshield side of the roof on the outside of the vehicle, and is formed to have an approximately closed rectangle shape, and is housed in a state of the approximately closed rectangle shape, and is developed in the approximately closed rectangle manner, the impact generated by the re-collision between the pedestrian or the like and the vehicle can be absorbed.

Further, since the first main expanding portion is disposed on the windshield side of the roof on the outside of the vehicle, and the second main expanding portions are disposed along the respective front pillars on the outside of the vehicle, the impact generated by the re-collision between the pedestrian or the like and the vehicle can be absorbed.

Hereinbelow, embodiments of the present invention will be explained using the drawings.
Fig. 1 is a view illustrating an embodiment of an airbag according to the present invention;
Fig. 2 is a perspective view illustrating a vehicle on which an airbag apparatus according to a first embodiment is mounted;
Fig. 3 is a perspective view illustrating the vicinity of a front pillar of the vehicle according to the first embodiment;
Fig. 4 is a cross-sectional view taken along a line a-a in Fig. 3;
Fig. 5 is a cross-sectional view taken along a line b-b in Fig. 3;
Fig. 6 is a cross-sectional view taken along a line c-c in Fig. 3;
Fig. 7 is a cross-sectional view taken along a line d-d in Fig. 3;
Fig. 8 is a cross-sectional view taken along a line e-e in Fig. 3;
Fig. 9 is a view illustrating an attaching method of a gas-generator according to the present invention;
Fig. 10 is a view illustrating an operation of the airbag apparatus according to the present invention;
Fig. 11 is a perspective view illustrating the vehicle in a completion stage of an expanding operation of the airbag;
Fig. 12 is a perspective view illustrating the vicinity of the front pillar in the completion stage of the expanding operation of the airbag;
Fig. 13 is a cross-sectional view taken along a line f-f in Fig. 12;
Fig. 14 is a cross-sectional view taken along a line g-g in Fig. 12;
Fig. 15 is a cross-sectional view taken along a line h-h in Fig. 12;
Fig. 16 is a view similar to Fig. 12 where the airbag is omitted;
Fig. 17 is a view illustrating a harness according to another embodiment;
Fig. 18 is a perspective view illustrating the vicinity of the front pillar of the vehicle according to a second embodiment;
Fig. 19 is a cross-sectional view taken along a line i-i in Fig. 18;
Fig. 20 is a perspective view illustrating the vehicle in the completion stage of the expanding operation of the airbag;
Fig. 21 is a cross-sectional view taken along a line j-j in Fig. 20; and
Fig. 22 is a perspective view illustrating the vehicle in the completion stage of the expanding operation of the airbag according to a third embodiment.

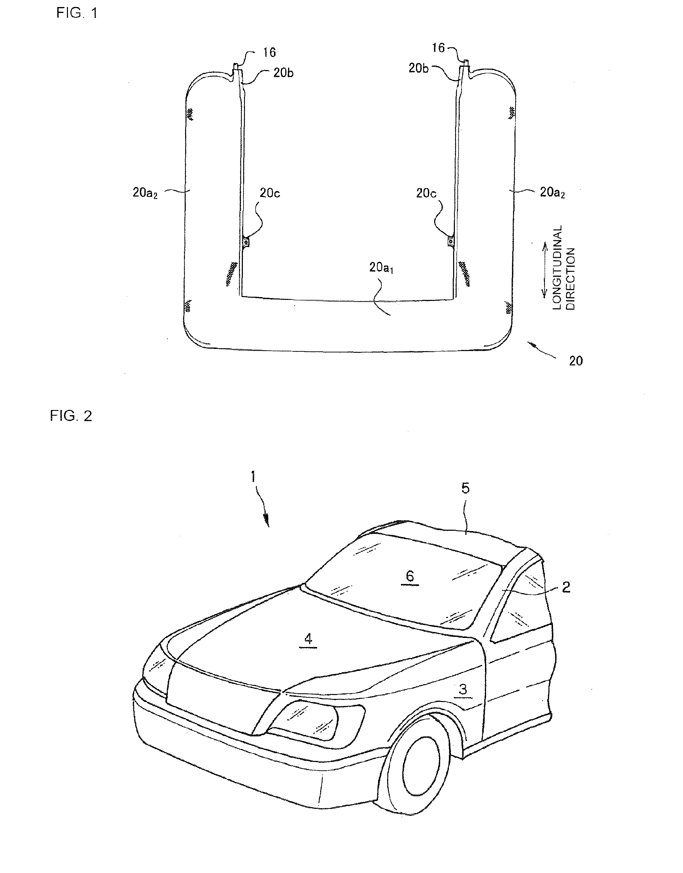

Fig. 1 illustrates an airbag 20 according to the present invention. The airbag 20 according to the present invention is formed of a base cloth whose outer periphery is stitched, and is composed of a main expanding portion 20a formed of an approximately U-shape and including a first main expanding portion 20a₁ at a center and second main expanding portions 20a₂ respectively extending from both ends of the first main expanding portion 20a₁, a pipe-connecting portion 20b, and a latching portion 20c. The main expanding portion 20a has an approximately elliptic shape, and is a portion that absorbs an impact generated by a collision between an object of the collision such as a pedestrian or the like, and a vehicle at a time of an expanding operation thereof. The pipe-connecting portion 20b is protruded from the main expanding portion 20a, and is a portion where a pipe 16 is inserted and swaged therewith. The latching portion 20c is provided upon protruded in an approximately perpendicular direction to a longitudinal direction of the second main expanding portion 20a₂ and is a portion for latching the airbag 20 to a vehicle body.

Next, a state in which an airbag apparatus 10 including the airbag 20 is mounted on the vehicle 1 will be explained.

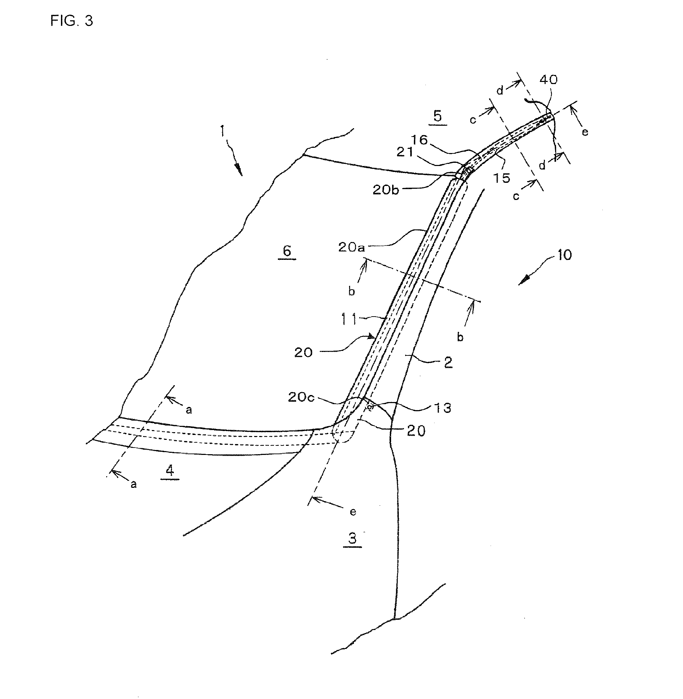

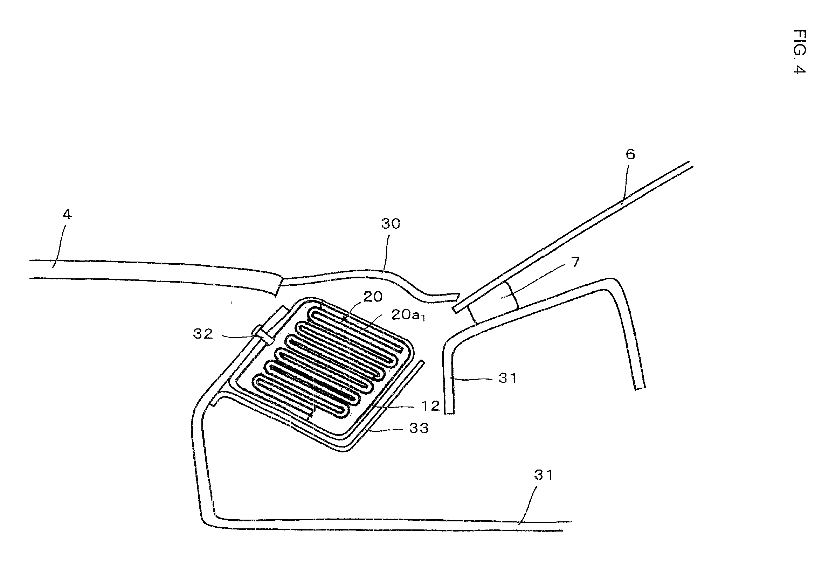

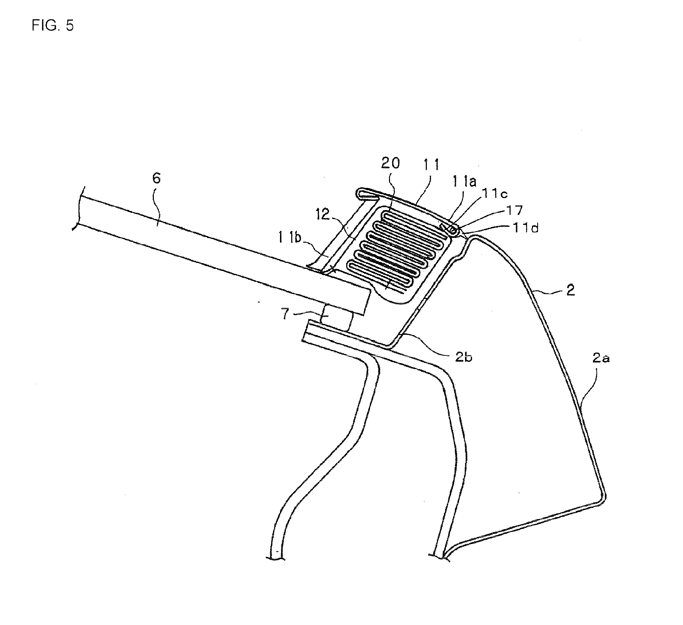

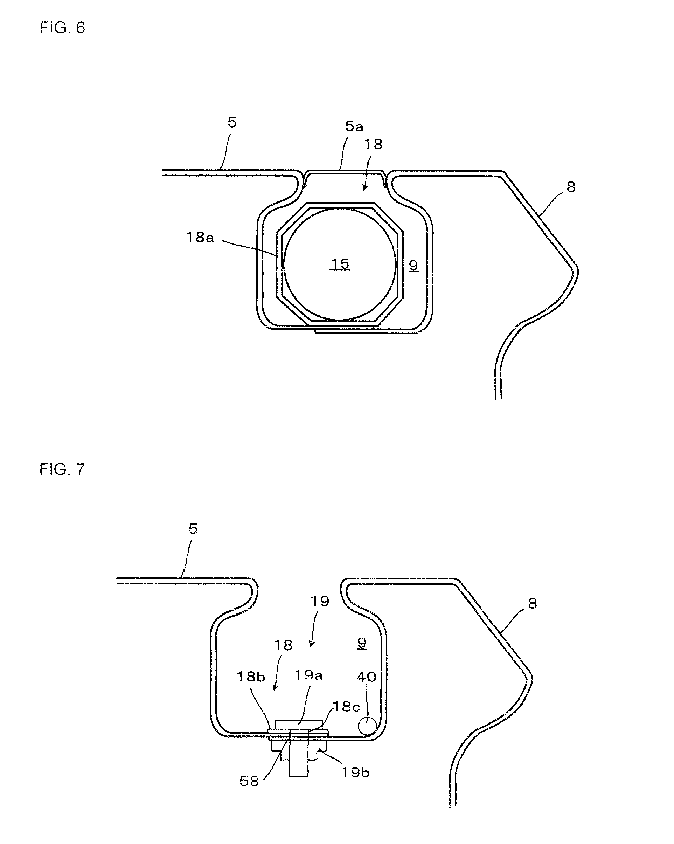

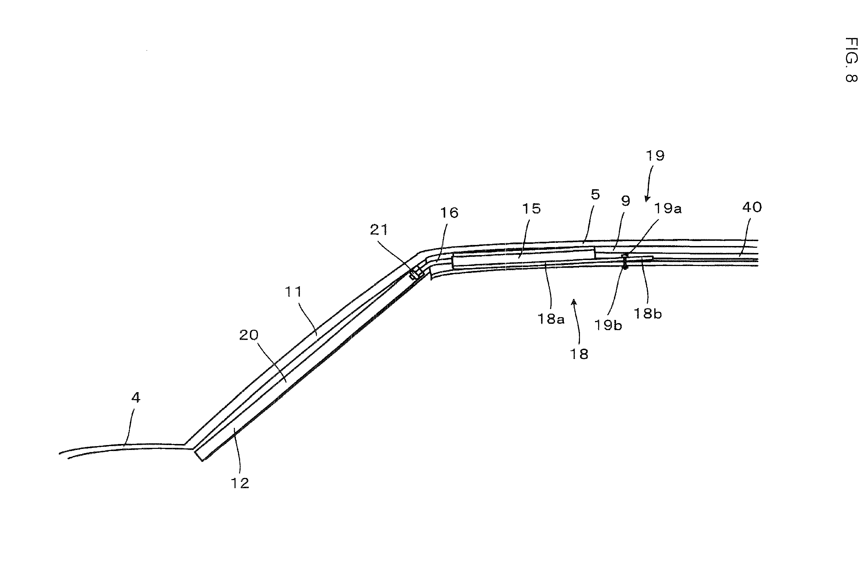

Fig. 2 is a perspective view illustrating a vehicle on which an airbag apparatus according to the first embodiment is mounted, Fig. 3 is a perspective view illustrating the vicinity of a front pillar of the vehicle according to the first embodiment, Fig. 4 is a cross-sectional view taken along a line a-a in Fig. 3, Fig. 5 is a cross-sectional view taken along a line b-b in Fig. 3, Fig. 6 is a cross-sectional view taken along a line c-c in Fig. 3, Fig. 7 is a cross-sectional view taken along a line d-d in Fig. 3, and Fig. 8 is a cross-sectional view taken along a line e-e in Fig. 3.

In the drawings, a numeral 1 denotes the vehicle, a numeral 2 denotes the front pillar, a numeral 3 denotes a fender, a numeral 4 denotes a hood, a numeral 5 denotes a roof, a numeral 6 denotes a windshield, a numeral 7 denotes a seal, a numeral 8 denotes a side-outer panel, a numeral 9 denotes a concave portion, a numeral 10 denotes the airbag apparatus, a numeral 11 denotes a cover, a numeral 12 denotes a bag case, a numeral 13 denotes an anchor, a numeral 15 denotes a gas-generator, a numeral 16 denotes a pipe, a numeral 17 denotes a cover-splash prevention member, a numeral 18 denotes a retainer, a numeral 19 denotes a fixing device, a numeral 20 denotes the airbag, a numeral 21 denotes a coupling device, a numeral 30 denotes a cowl top, a numeral 31 denotes a dashboard, a numeral 32 denotes a clip, a numeral 33 denotes a guide plate, and a numeral 40 denotes a harness.

The vehicle 1 is provided with the front pillars 2 that couple a not-illustrated member or an engine room frame with the roof 5. Further, the vehicle 1 is provided with the windshield 6 surrounded by the hood 4, the roof 5, and the front pillars 2, and attached thereto via the seal 7.

Fig. 4 illustrates a housing state of the first main expanding portion 20a₁ of the airbag 20. The cowl top 30 is disposed in a clearance between a front side below the windshield 6 and a rear side of the hood 4. The first main expanding portion 20a₁ of the airbag 20 is held in the dashboard 31 underneath the cowl top 30 by means of the clip 32 or the like in a state of being housed in the bag case 12. Furthermore, underneath the bag case 12, the guide plate 33 for guiding a developing direction of the first main expanding portion 20a₁ of the airbag 20 at a time when the airbag 20 is expanded is provided.

Fig. 5 also illustrates the housing state of the second main expanding portion 20a₂ of the airbag 20. As illustrated in Fig. 5, the airbag apparatus 10 is housed on a windshield 6 side of the front pillar 2 and the fender 3. The front pillar 2 is provided with a first surface 2a facing an outside of the vehicle 1 and a second surface 2b facing the windshield 6 side, and the second main expanding portion 20a₂ of the airbag 20 is housed in the cover 11 in a state of being folded back and housed in the bag case 12 on the second surface 2b side.

Accordingly, the bag case 12 is formed to have a U-shape in conformity to a U-shape of the airbag 20. Incidentally, the bag case 12 is not always necessary to be formed to have the U-shape.

The cover 11 is formed of a member having an approximately L-shape in cross-section provided with an upper cover 11a and a side cover 11b on the windshield 6 side, and is disposed in a manner so as to hide the second main expanding portion 20a₂ of the airbag 20, which is folded back on the second surface 2b side of the front pillar 2. Incidentally, the second main expanding portion 20a₂ of the folded-back airbag 20 may be directly housed in the cover 11 without being housed in the bag case 12.

In the cover 11, the cover-splash prevention member 17, such as a strap or the like is inserted into a folded-back portion 11c of the upper cover 11a.

In the vicinity of the folded back portion 11c of the upper cover 11a, a seal 11d is attached, and is configured to cover a clearance between the front pillar 2 and the cover 11 and to increase a design performance and a water-tightness.

As illustrated in Fig. 6 through Fig. 8, in the concave portion 9 formed in a coupling portion for coupling the roof 5 with the side-outer panel 8 of the vehicle, a gas-generator 15 that generates a gas for expanding the airbag 20 and the pipe 16 for supplying the gas generated by the gas-generator 15 into the airbag 20, and so forth are housed.

The gas generator 15 is disposed in the concave portion 9 in a state of being covered by the retainer 18, and is fixed to the roof 5 and the side-outer panel 8 with a fixing device 19 such as a bolt 19a and a nut 19b, or the like.
The concave portion 9 is configured such that an opening portion is obstructed by means of a roof molding 5a.

The pipe 16 is disposed in the concave portion 9 similar to the case of the gas-generator 15, and is coupled with the airbag 20 by means of the coupling device 21, such as a clamp band or the like. Incidentally, the coupling device 21 is not always necessary to be disposed in the concave portion 9.

Moreover, in the gas-generator 15, a harness 30, which is coupled with a not-illustrated power source, a control device, and so forth, is coupled, and is disposed in the concave portion 9 along a vehicle-rear side.

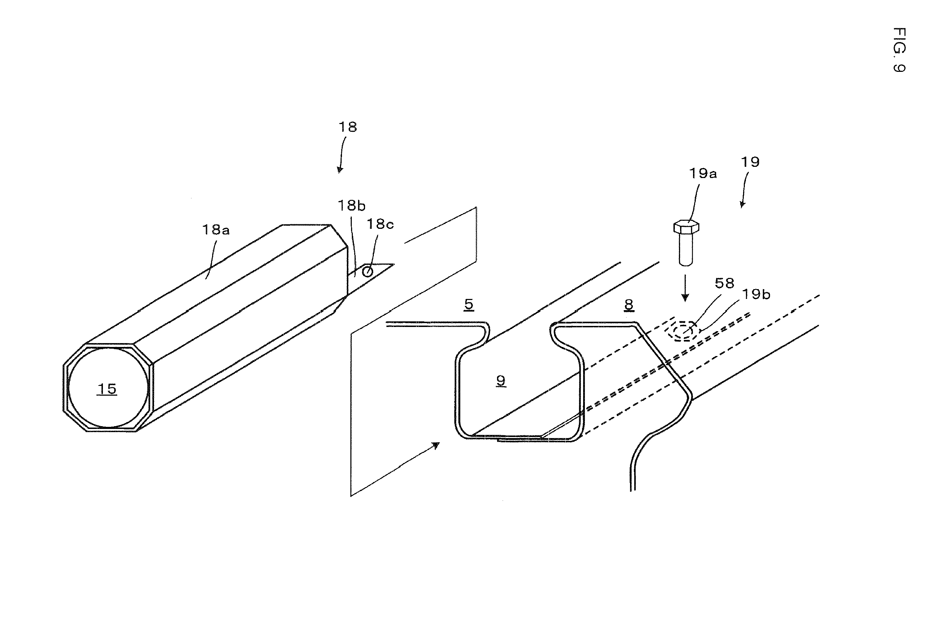

Fig. 9 is a view illustrating an attaching method for attaching a gas-generator 15 according to the present invention. The retainer 18 is provided with a main body portion 18a for covering and holding the gas-generator 15, an attaching portion 18b for fixing the retainer 15 to the vehicle body in the concave portion 9, and an attaching hole 18c. Firstly, the gas-generator 15 in a state of being covered with the retainer 18 is inserted into the concave portion 9 while sliding therewith. A hole 58 is formed at a coupling portion in the concave portion 9 where the roof 5 and the side-outer panel 8 are coupled, and on an opposite side of the concave portion 9 of the hole 58, a nut 19b is previously fixed. Further, the attaching hole 18c of the inserted retainer 18 is disposed in a manner so as to overlap with the hole 58 and fixed by means of the bolt 19a.

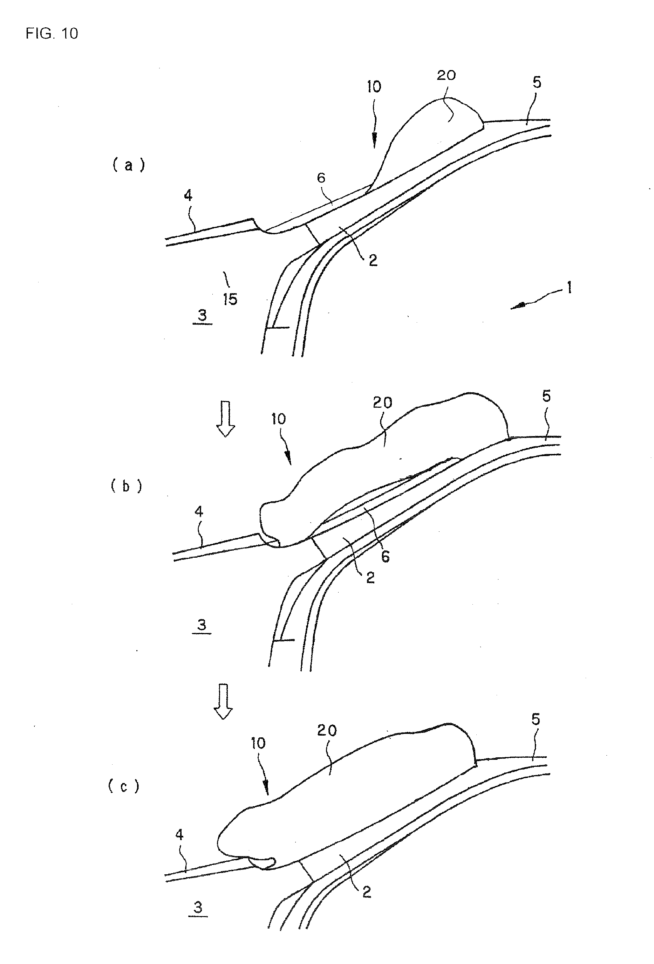

Next, an operation of the airbag apparatus 10 according to the present invention will be explained. Fig. 10 is a view illustrating an operation of the airbag apparatus 10 according to the present embodiment.

The airbag apparatus 10 in a housed-state illustrated in Fig. 3 through Fig. 5 is operated by means of the control device or the like on the basis of a detection signal in a case that the vehicle 1 collides with a not-illustrated object of the collision, and an impact force generated in the vehicle 1 is detected by means of a not-illustrated detection device or the like, or in a case that the vehicle 1 collides with a not-illustrated object of the collision, and a prognosis of the collision is detected by means of a detection device or the like.

Fig. 10(a) illustrates an initial stage of the expanding operation in which the airbag apparatus 10 starts the operation, and the gas flows into an inside of the airbag 20 from the gas-generator 15 housed in the concave portion 9 through the pipe 16, and the airbag 20 starts to be expanded. In the initial stage of the expanding operation, the airbag 20 starts to be expanded from the roof 5 side, and the cover 11 and the cowl top 30 illustrated in Fig. 3 through Fig. 5 are developed by means of an expanding pressure of the airbag 20.

Fig. 10(b) illustrates an intermediate stage of the expanding operation in which the gas flows into the inside of the airbag 20 from the gas-generator 15 through the pipe 16, and the airbag 20 continues the expanding operation. In the intermediate stage of the expanding operation, an entire airbag 20 is completely exposed to the outside from the folded-back state.

Fig. 10(c) illustrates a completion stage of the expanding operation in which the expanding operation of the airbag 20 is completed. In the completion stage of the expanding operation, the airbag 20 is completely expanded.
A state of the airbag apparatus 10 in the completion stage of the expanding operation will be explained below.

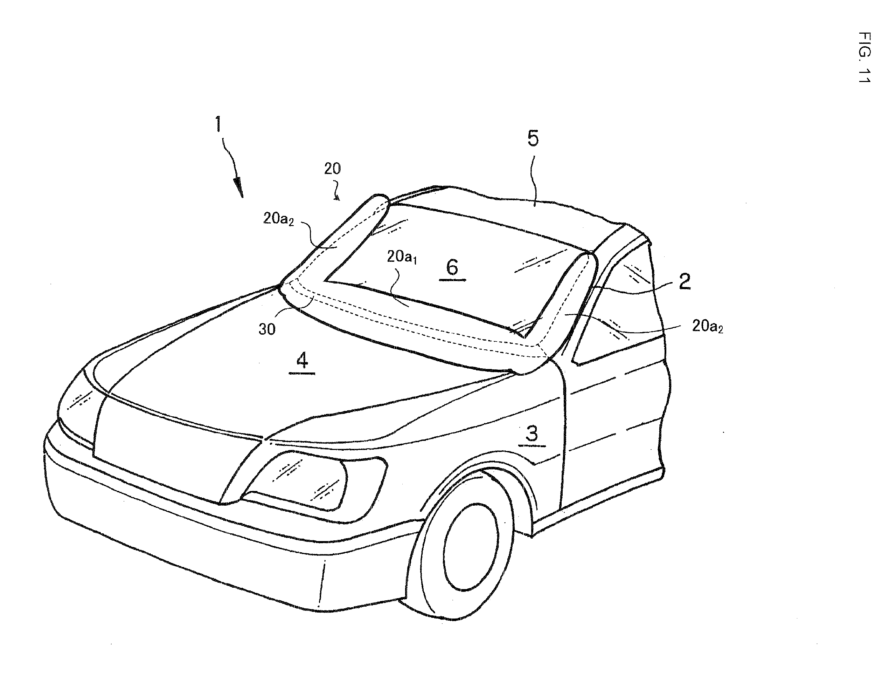

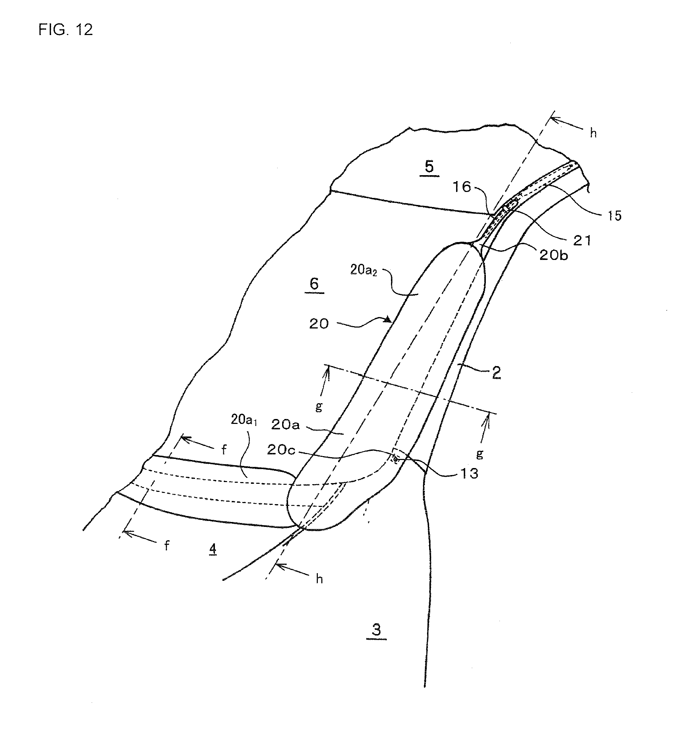

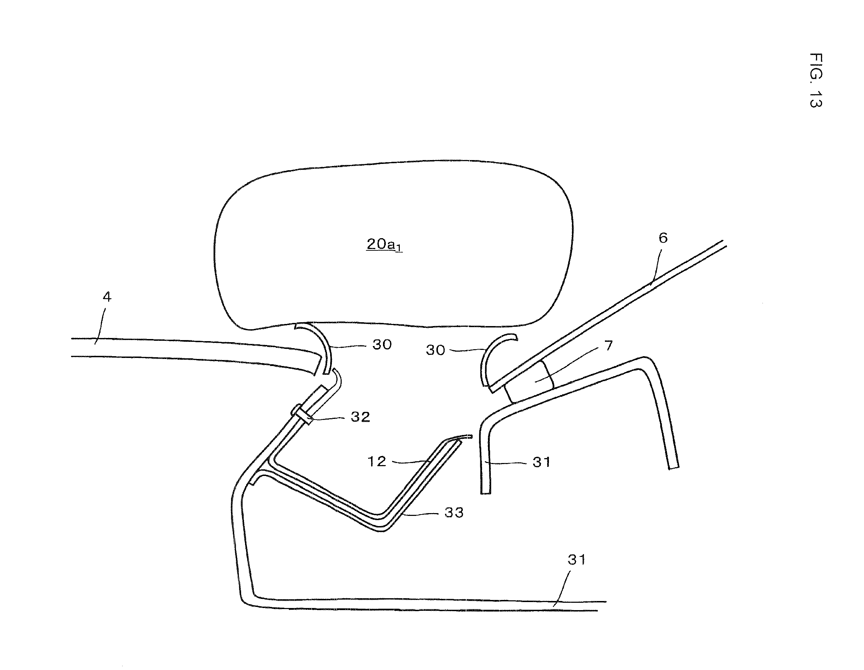

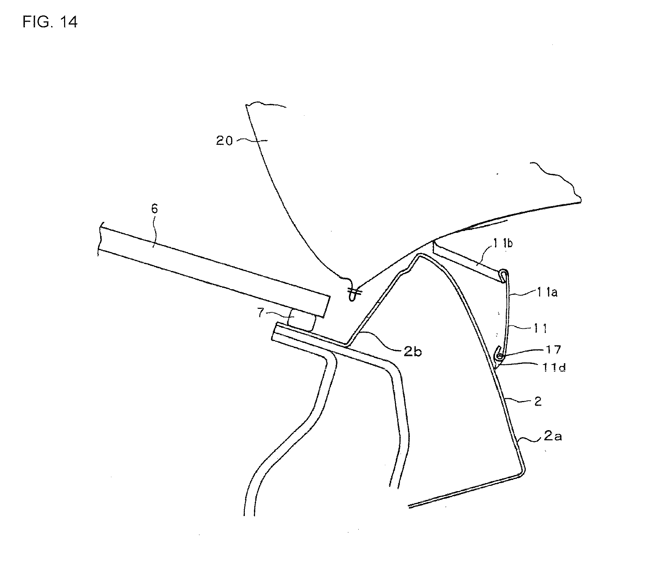

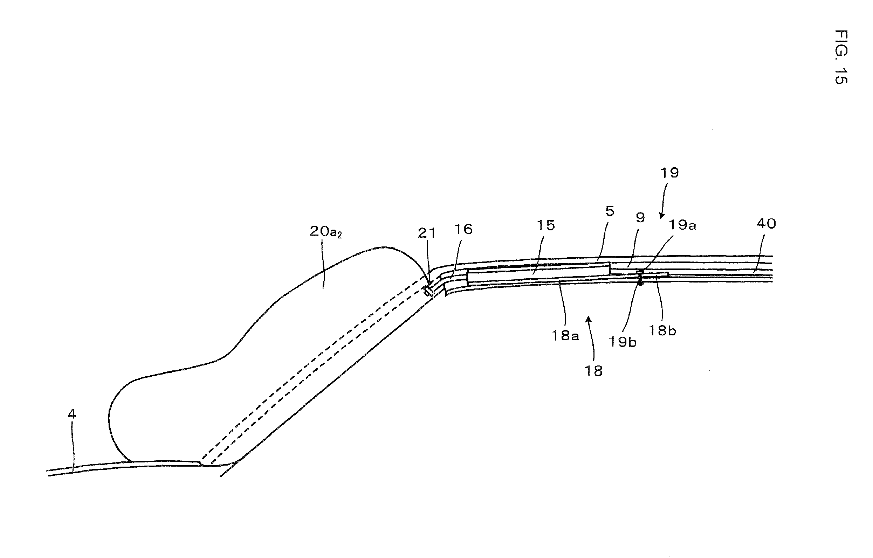

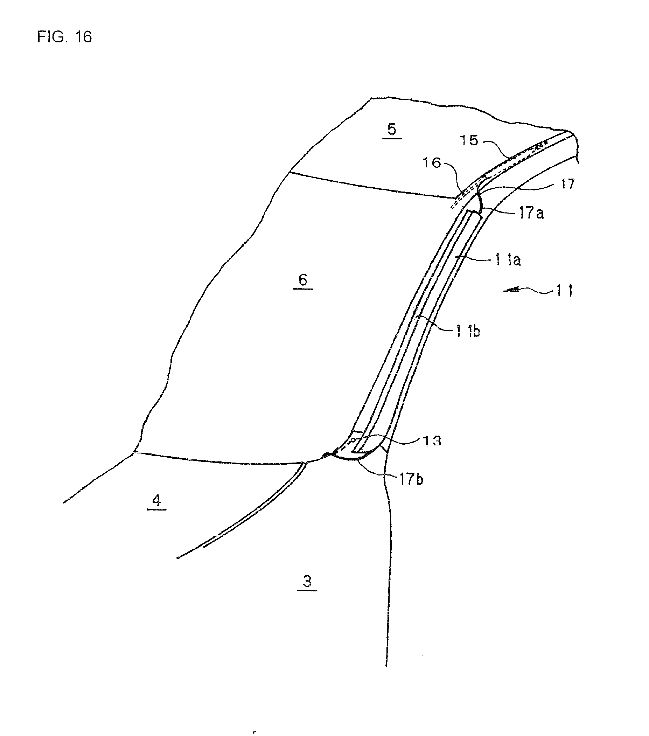

Fig. 11 is a perspective view illustrating the vehicle in the completion stage of the expanding operation of the airbag, Fig. 12 is a perspective view illustrating the vicinity of the front pillar 2 in the completion stage of the expanding operation of the airbag, Fig. 13 is a cross-sectional view taken along a line f-f in Fig. 12, Fig. 14 is a cross-sectional view taken along a line g-g in Fig. 12, Fig. 15 is a cross-sectional view taken along a line h-h in Fig. 12, and Fig. 16 is a view similar to Fig. 12 where the airbag 20 is omitted.

As illustrated in Fig. 11 and Fig. 12, in the completion stage of the expanding operation, the first main expanding portion 20a₁ of the airbag 20 is developed in a direction following the cowl top 30 disposed in a clearance between a rear side of the hood 4 and the front side below the windshield 6, and the second main expanding portions 20a₂ of the airbag 20 is developed in a direction following the front pillars 2, respectively, above a part of the fender 3 and the hood 4, and at the front side of the front pillar 2.

As illustrated in Fig. 13, in the completion stage of the expanding operation, the first main expanding portion 20a₁ of the airbag 20 expands and opens the cowl top 30, and is developed toward a space at the rear side of the hood 4 and the front side below the windshield 6. At this moment, the first main expanding portion 20a₁ itself is not fixed to any place, and is fixed via the second main expanding portions 20a₂ by means of the latching portion 20c.

As described above, since the first main expanding portion 20a₁ itself is not fixed to any place, a case having rigidity is not necessary, and a size and a weight of the airbag apparatus 10 can be vastly lightened.

Further, as illustrated in Fig. 14 and Fig. 15, in the completion stage of the expanding operation, the cover 11 is spaced apart from the front pillar 2 and the windshield 6, and the second main expanding portions 20a₂ of the airbag 20 is expanded toward a front side of the front pillar 2 having high possibility to be collided with the object of a collision, such as a pedestrian or the like.

At this moment, as illustrated in Fig. 16, since the cover 11 is latched to a vehicle body side by means of the cover-splash prevention member 17 via the anchor 13, the gas-generator 15, and so forth, there is no possibility that the cover 11 is splashed from the vehicle 1. One end 17a of the cover-splash prevention member 17 is latched to the gas-generator 15 or a member for fixing the same to the vehicle body, and the other end 17b is latched to the vehicle body side, such as a root portion of the front pillar 2, a member, or the like by means of the anchor 13 or the like. Incidentally, the cover-splash prevention member 17 may be divided into a cover-splash prevention member 17a for coupling the gas-generator 15 and the like with the cover 11, and a cover-splash prevention member 17b for coupling the anchor 13 with the cover 11.

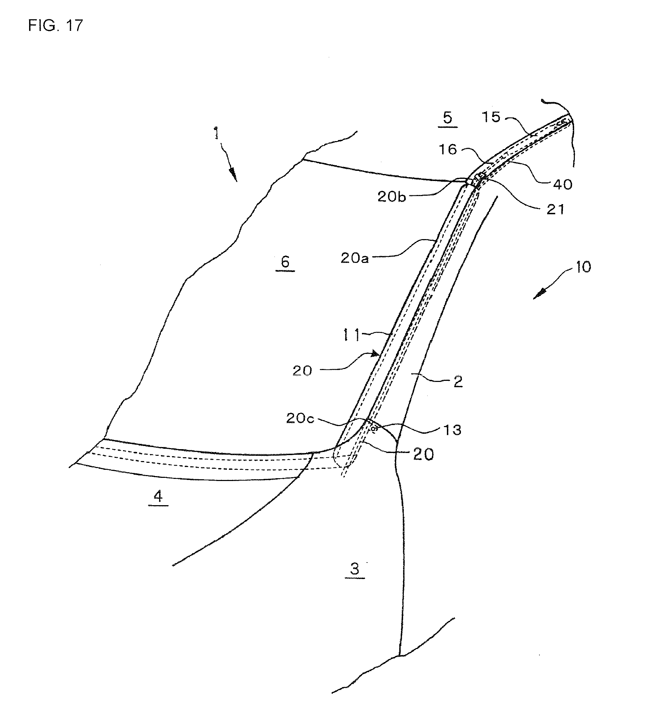

Furthermore, as illustrated in Fig. 17, as another embodiment, the harness 40 to be coupled with the gas-generator 15 may have a structure that is folded back from a rear side and that is caused to follow the front side of the vehicle in the concave portion 9.

Incidentally, in the first embodiment, although the construction is made in such a way that the gas-generator 15 is disposed in the concave portion 9 of the roof 5 and the side-outer panel 8, the present invention is not limited thereto and various modifications may be applicable.

Next, a second embodiment in which an arranging position of the airbag 20 is changed will be explained.

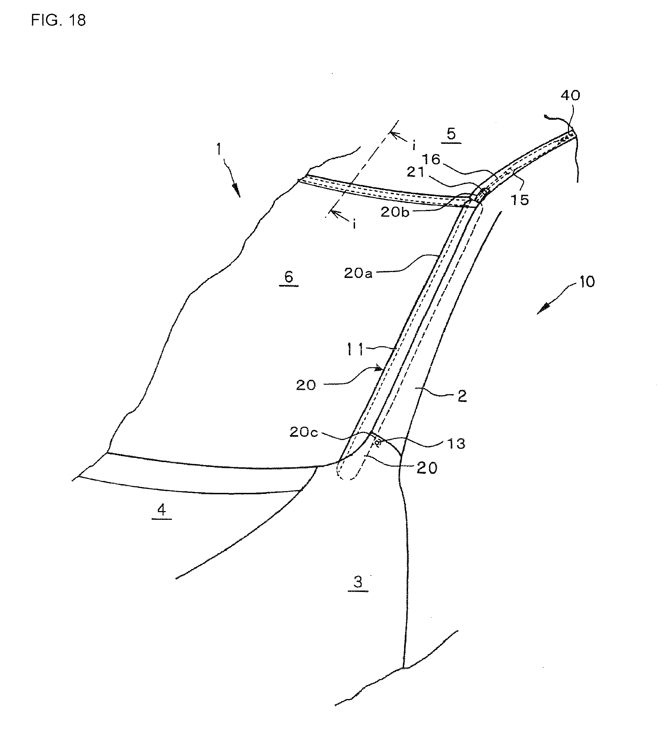

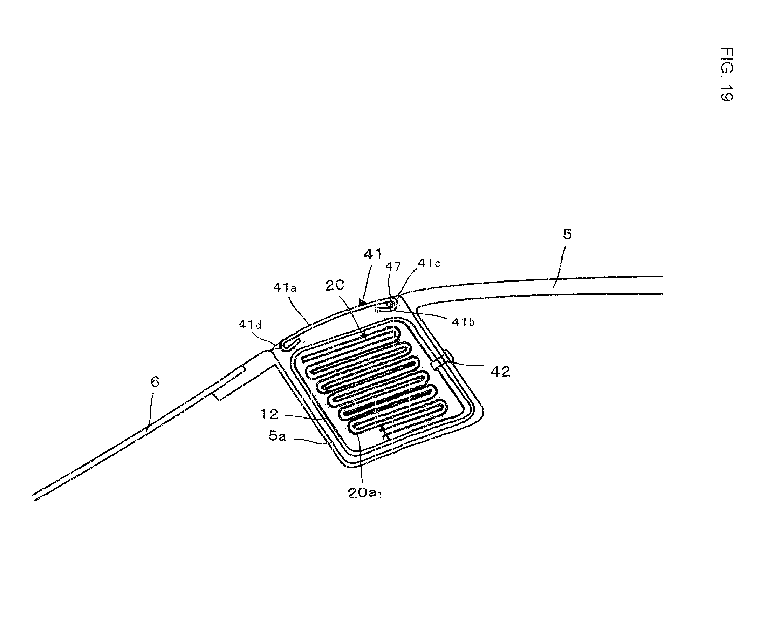

Fig. 18 is a perspective view illustrating the vicinity of the front pillar of the vehicle in which an airbag apparatus according to the second embodiment is mounted, and Fig. 19 is a cross-sectional view taken along a line i-i in Fig. 18.

In the drawings, a numeral 5a denotes a housing portion, a numeral 41 denotes a second cover, and a numeral 42 denotes a clip, and the same numerals as that in the first embodiment are used in other construction.

Fig. 19 illustrates a housing state of the first main expanding portion 20a₁ of the airbag 20. In the roof 5, a concave shaped housing portion 5a is formed. It is preferable if the housing portion 5a is located along an upper edge of the windshield 6. The first main expanding portion 20a₁ of the airbag 20 is held by means of the housing portion 5a with the clip 42 or the like in a state of being housed in the bag case 12. A second cover 41 is provided above the bag case 12 in a manner so as to cover the housing portion 5a.

The second cover 41 is provided with an upper cover 41a and a folded-back portion 41b, and is disposed in a manner so as to hide the first main expanding portion 20a₁ of the airbag 20. Incidentally, the first main expanding portion 20a₁ of the folded-back airbag 20 may be directly housed in the housing portion 5a without being housed in the bag case 12.

In the second cover 41, a second cover-splash prevention member 47, such as a strap or the like is inserted into the folded-back portion 41b of the upper cover 41a.

In the vicinity of the folded-back portion 41b of the upper cover 41a, seals 41c and 41d are attached, and cover a clearance between the roof 5 and the upper cover 41a. This increases the design performance or the water-tightness in the housing portion 5a.

Since the housing state of the second main expanding portion 20a₂ of the airbag 20 is the same as that in the first embodiment illustrated in Fig. 5, and the explanation is omitted.

As described above, the airbag 20 is formed to have a reversed U-shape. In addition, in conformity to the reversed U-shape of the airbag 20, the bag case 12 is also formed to have the reversed U-shape. Incidentally, the bag case 12 is not always necessary to be formed to have the reversed U-shape.

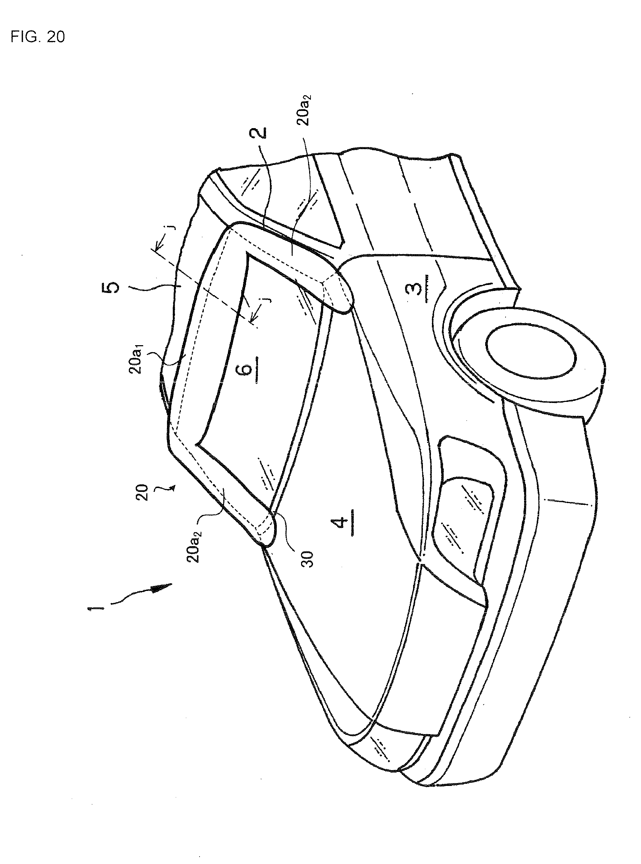

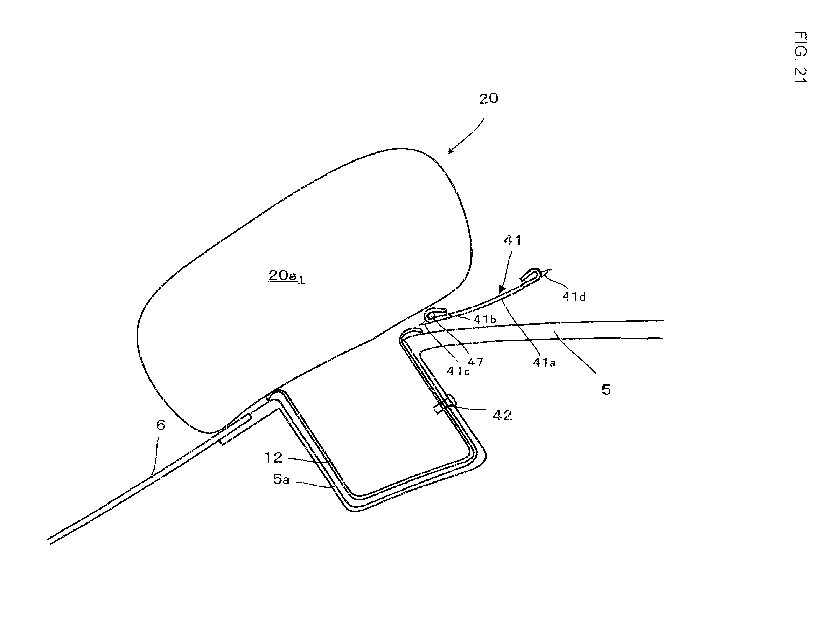

Next, a completion stage of the expanding operation of the second embodiment will be explained. Fig. 20 is a perspective view illustrating the vehicle in the completion stage of the expanding operation of the airbag, and Fig. 21 is a cross-sectional view taken along a line j-j in Fig. 20.

As illustrated in Fig. 20, in the completion stage, the first main expanding portion 20a₁ of the airbag 20 is developed in a direction following the housing portion 5a, and the second main expanding portion 20a₂ of the airbag 20 is developed in a direction following the front pillar 2 above a part of the fender 3 and the hood 4, and in front of the front pillar 2.

As illustrated in Fig. 21, in the completion stage of the expanding operation, the first main expanding portion 20a₁ of the airbag 20 expands and opens the second cover 41 and is developed toward a space above the housing portion 5a and a boundary between the windshield 6 and the roof 5. At this moment, the first main expanding portion 20a₁ itself is not fixed to any place and is fixed by means of the latching portion 20c illustrated in Fig. 18 via the second main expanding portion 20a₂.

As described above, since the first main expanding portion 20a₁ itself is not fixed to any place, the case having rigidity is not necessary, and a size and a weight of the airbag apparatus 10 can be vastly lightened.

At this moment, as illustrated in Fig. 21, since the second cover 41 is latched to the vehicle body side by means of the second cover-splash prevention member 47 via the gas-generator 15 or the like, there is no possibility for the second cover 41 to be splashed from the vehicle 1. End portions of the second cover-splash prevention member 47 are respectively latched to the gas-generator 15 or a member for fixing the gas-generator 15 to the vehicle body. Incidentally, the second cover-splash prevention member 47 may be divided into two second cover-splash prevention members 47 that respectively couple the left and right gas-generators 15 or the like, with the second cover 41.

Moreover, as illustrated in Fig. 14 and Fig. 15, in the completion stage of the expanding operation, the cover 11 is spaced apart from the front pillar 2 and the windshield 6, and the second main expanding portion 20a₂ of the airbag 20 are expanded toward a front side of the front pillar 2 having a high possibility to collide with the object of the collision, such as the pedestrian or the like.

At this moment, as illustrated in Fig. 16, since the cover 11 is latched to the vehicle body side by means of the cover-splash prevention member 17 via the anchor 13, the gas-generator 15, and so forth, there is no possibility that the cover 11 is splashed from the vehicle 1. The one end 17a of the cover-splash prevention member 17 is latched to the gas-generator 15 or a member for fixing the gas-generator 15 to the vehicle body, and the other end 17b is latched to the vehicle body side, such as a root portion of the front pillar 2, a member, or the like by means of the anchor 13 or the like. Incidentally, the cover-splash prevention member 17 may be divided into a cover-splash prevention member 17a for coupling the gas-generator 15 and the like with the cover 11, and a cover-splash prevention member 17b for coupling the anchor 13 with the cover 11.

Further, as illustrated in Fig. 17, as another embodiment, the harness 40, which is coupled with the gas-generator 15, may have a structure that is folded back from a rear side and follows to a front side of the vehicle in the concave portion 9.

Incidentally, in the second embodiment, although the construction is also made in such a way that the gas-generator 15 is disposed in the concave portion 9 of the roof 5 and the side-outer panel 8, the present invention is not limited thereto and various modifications may be applicable.

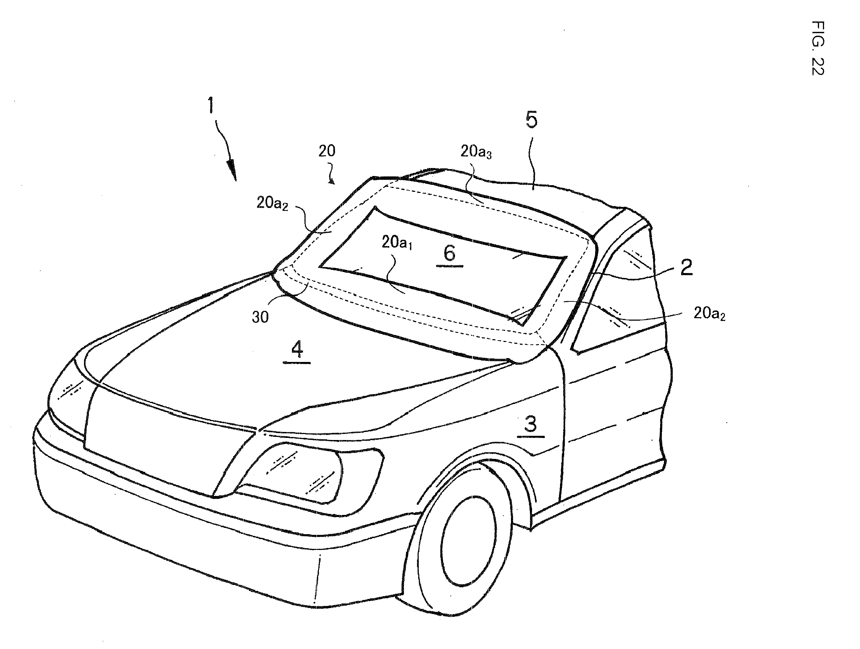

Fig. 22 is a perspective view illustrating the vehicle in the completion stage of the expanding operation of the airbag according to a third embodiment. The third embodiment is constructed in such a way that the airbag 20 is formed to have a closed rectangle shape by means of providing a third main expanding portion 20a₃ connecting both ends of the U-shaped airbag 20 that is used in the first embodiment.

Since the construction of the first main expanding portion 20a₁ when it is housed is similar to the construction in Fig. 3 and Fig. 4 by which the first embodiment is explained, and the construction of the second main expanding portion 20a₂ when it is housed is similar to that in Fig. 3 and Fig. 5, and the construction of the third main expanding portion 20a₃ when it is housed is similar to that in Fig. 18 and Fig. 19, by which the state when the first main expanding portion 20a₁ in the second embodiment is housed is explained, the explanation is omitted.

Furthermore, since the construction of the first main expanding portion 20a₁ when the expanding operation thereof is completed is similar to the construction in Fig. 11, Fig. 12, and Fig. 13 in which the first embodiment is explained, the construction of the second main expanding portion 20a₂ when the expanding operation thereof is completed is similar to the construction in Fig. 11, Fig. 12 and Fig. 14, and the construction of the third main expanding portion 20a₃ when the expanding operation thereof is completed is similar to the construction in Fig. 20 and Fig. 21 by which the state when the first main expanding portion 20a₁ in the second embodiment is completed is explained, the explanation is omitted.

In the third embodiment, since the first main expanding portion 20a₁ and the third main expanding portion 20a₃ are not fixed to any place, a case having rigidity is not necessary, and a size and a weight of the airbag apparatus 10 can be vastly lightened.

As described above, since the airbag 20 is formed to have an approximately U-shape, which is provided with the first main expanding portion 20a₁ and the second main expanding portions 20a₂ respectively extending from both ends of the first main expanding portion 20a₁, and is housed in an approximately U-shaped state, and is developed in an approximately U-shaped manner, a distance of the airbag 20 from a housed position to a developed position is small, and thereby the airbag 20 can be rapidly developed.

Moreover, since the airbag 20 is configured to fix only the second main expanding portion 20a₂ to the vehicle body side, a case having rigidity, for the first main expanding portion 20a₁ is not necessary, and a size and a weight of the airbag apparatus 10 can be lightened as a whole.

Further, since the first main expanding portion 20a₁ is disposed at a front side below the windshield 6 on an outside of the vehicle, and the second main expanding portion 20a₂ is disposed along the front pillar 2 on the outside of the vehicle, the impact generated by a re-collision between a pedestrian or the like and a vehicle is absorbed.

### [Industrial Applicability]

According to the thus constructed airbag apparatus with respect to the present invention, since the airbag is formed to have an approximately U-shape including the first main expanding portion and the second main expanding portions respectively extending from both ends of the first main expanding portion, and is housed in a state of the approximately U-shape, and is developed in the approximately U-shape manner, a distance from the housed position to the developing position is small and thereby the airbag can be rapidly expanded.

Furthermore, since the airbag is configured to fix only the second main expanding portion to the vehicle body side, a case having rigidity, for the first main expanding portion is not necessary, and a size and a weight of the airbag apparatus can be lightened as a whole.

Moreover, since the first main expanding portion is disposed at a front side below the windshield on the outside of the vehicle, and the second main expanding portion is disposed along the front pillar on the outside of the vehicle, the impact generated by a re-collision between a pedestrian or the like, and a vehicle is absorbed.

Further, since the airbag is provided with a third main expanding portion that couples end portions of the respective second main expanding portions, and faces the first main expanding portion, and is disposed on the windshield side of the roof on the outside of the vehicle, and is formed to have an approximately closed rectangle shape, and is housed in a state of the approximately closed rectangle shape, and is developed in the approximately closed rectangle manner, the impact generated by the re-collision between the pedestrian or the like and the vehicle can be absorbed.

Furthermore, since the third main expanding portion is disposed on the windshield side of the roof on the outside of the vehicle, and the second main expanding portion is disposed along the front pillar on the outside of the vehicle, the impact generated by the re-collision between the pedestrian or the like and the vehicle can be absorbed.

## Claims

1. An airbag apparatus comprising:
an airbag;
a gas-generator for blowing out a gas into an inside of the airbag;
a detection device for detecting a collision; and
a control device for activating the gas-generator by means of a signal from the detection device, and expanding the airbag on an outside of a vehicle,
wherein the airbag is formed in an approximately U-shaped manner including a first main expanding portion, and second main expanding portions respectively extending from both ends of the first main expanding portion, and is housed in an approximately U-shaped state, and is developed in an approximately U-shaped manner.

2. The airbag apparatus according to Claim 1, wherein the airbag is configured to fix only the second main expanding portions to a vehicle body side.

3. The airbag apparatus according to Claim 1 or 2, wherein the first main expanding portion is disposed at a front side below the windshield on the outside of the vehicle, and the second main expanding portions are disposed along front pillars, respectively, on the outside of the vehicle.

4. The airbag apparatus according to Claim 3, wherein the airbag includes a third main expanding portion that couples end portions of the respective second main expanding portions and faces the first main expanding portion, and that is disposed on the windshield side of a roof on the outside of the vehicle, and wherein the airbag is formed to have an approximately closed rectangle shape, and is housed in a state of the approximately closed rectangle shape, and is developed in the approximately closed rectangle manner.

5. The airbag apparatus according to Claim 1 or 2, wherein the first main expanding portion is disposed on a windshield side of a roof on the outside of the vehicle, and the second main expanding portion is disposed along a front pillar on the outside of the vehicle.
